Europäisches Patentamt

European Patent Office

Office européen des brevets

(11) Publication number: **0 094 135**
**B1**

# (12) EUROPEAN PATENT SPECIFICATION

(45) Date of publication of patent specification: **16.04.86**

(51) Int. Cl.⁴: **C 08 L 51/04,** C 08 L 55/02

(21) Application number: **83200645.6**

(22) Date of filing: **06.05.83**

(54) **Process for the preparation of a thermoplastic moulding composition with low surface gloss.**

(30) Priority: **07.05.82 NL 8201893**

(43) Date of publication of application:
**16.11.83 Bulletin 83/46**

(45) Publication of the grant of the patent:
**16.04.86 Bulletin 86/16**

(84) Designated Contracting States:
**AT BE CH DE FR GB IT LI NL SE**

(56) References cited:
**EP-A-0 044 682**
**GB-A-1 049 665**
**GB-A-1 412 749**
**US-A-3 475 516**

(73) Proprietor: **STAMICARBON B.V.**
**Mijnweg 1**
**NL-6167 AC Geleen (NL)**

(72) Inventor: **Hoen, Johannes Gerardus**
**Prevotlaan 9**
**NL-6132 BM Sittard (NL)**
Inventor: **Flinsenberg, Martin Joseph Peter**
**Reinierstraat 2**
**NL-6191 SH Beek (L) (NL)**
Inventor: **Tijssen, Jan**
**Alexanderstraat 32**
**NL-6176 BR Spaubeek (NL)**

(74) Representative: **Hatzmann, Marinus Jan et al**
**OCTROOIBUREAU DSM P.O.Box 9**
**NL-6160 MA Geleen (NL)**

Courier Press, Leamington Spa, England.

**0 094 135**

## Description

The invention relates to a process for the preparation of a thermoplastic moulding composition with low surface gloss on the basis of a graft copolymer of a vinyl aromatic compound, and optionally an acrylic compound, on a rubber, and optionally a copolymer of a vinyl aromatic compound and an acrylic compound.

One of the characteristic properties of ABS plastics is, besides the good impact strength, the attractive glossy surface.

For a number of applications of ABS plastics, however, it is desirable that the objects obtained have a uniformly mat surface.

Examples of such applications are housings of electrical equipment, cases and automotive parts such as dash boards.

It has already been proposed to modify ABS by adding a conjugated diene compound during the preparation of the graft polymer. This, however, requires one or more modifications of the polymerization process, while in addition the processing behaviour deteriorates due to the cross-linking of the continuous phase introduced by the diene compound (US patent specification 4,252,912).

The object of the invention is to provide a simple process by which ABS plastics having low surface gloss can be made.

The process according to the invention is characterized in that a latex of the graft copolymer and/or the copolymer is mixed with latex of a rubber and the mixture obtained is coagulated and further processed in a way known per se.

The rubber latex to be added preferably is a latex of a rubber corresponding to the rubber in the graft copolymer. This has as an advantage that the application of special additives, such as antioxidants, for the rubber applied can usually be dispensed with.

By preference such an amount of rubber latex is added that this rubber accounts for 5 to 25 wt. % of the final product. Besides the added rubber, the final product also contains the rubber which is incorporated in the graft copolymer. The grafted rubber usually is 5—40 wt. % of the graft copolymer and the copolymer component of the final product taken together.

With the said contents of added rubber a moulding composition is obtained which combines a mat surface with good mechanical properties.

The graft copolymer can be obtained by emulsion polymerization of one or more vinyl aromatic compounds, and optionally an acrylic compound, in the presence of a rubber.

Since according to the invention it is essential that a latex of the graft copolymer and/or the copolymer is mixed with the rubber latex, the preparation of the graft copolymer and/or the copolymer should at least in part take place by means of emulsion polymerization. Another possibility is that the graft polymer and/or the copolymer is brought into latex at a later stage.

It is, however, also possible to apply a combination of polymerization systems, such as mass-emulsion polymerization.

If only a latex of the copolymer or the graft copolymer is mixed with the rubber latex, the other component, which is then added after the coagulation of the latex mixture, for instance in the extruder, may be prepared via the same or a different polymerization method. It is, of course, essential that an amount of graft copolymer is present in the ultimate moulding compound.

As vinyl aromatic compound, styrene, α-methyl styrene or derivatives of these compounds that are substituted in the aromatic ring are suitable in the preparation of the (graft) copolymer.

Suitable substituents are alkyl groups such as a methyl group and/or halogens such as chlorine or bromine. Also, mixtures of two or more vinyl aromatic compounds can be applied.

Besides the vinyl aromatic compound one or more other monomers can be used in the preparation of the graft copolymer and/or the copolymer. In this respect particularly the acrylic compounds, such as acrylonitrile and methacrylonitrile, are of interest. It is, however, also possible although less preferred to use acrylates such as methylmethacrylate or ethylacrylate.

Possible other suitable monomers are maleic anhydride, coumarone, indene and vinyl acetate.

The graft copolymer and the copolymer optionally used are preferably built up of the same monomers. It is, however, also possible to prepare the graft copolymer with styrene and acrylonitrile as monomers, while in the copolymer styrene and/or acrylonitrile are partly or wholly replaced by one or more other monomers such as methylmethacrylate, α-methylstyrene or maleic anhydride.

As rubber, in principle any rubber may be applied in the preparation of the graft copolymer. It is preferred to use polybutadiene homopolymers or butadiene copolymers having a butadiene content of more than 60 wt. %. If other dienes, for instance isoprene, or the lower ($C_1$—$C_4$) alkyl esters of acrylic acid, are used as comonomers, the butadiene content of the rubber can be reduced to 30 wt. % without any disadvantage with respect to the properties of the polymer composition. In principle it is also possible to prepare the graft polymer according to the invention from saturated rubbers, the instance from ethylene vinyl acetate copolymers with a vinyl acetate content of less than 50 wt. % or from ethylene-propylene-diene-terpolymers (these dienes are not conjugated; examples are 1,4 hexadiene, ethylidene norbornene, dicyclopentadiene), as well as from acrylate rubber, chlorinated polyethylene or chloroprene rubber. Mixtures of two or more rubbers can also be applied.

2

The preparation of both the rubber and the graft copolymer can take place in a way known in the art.

In this preparation, the usual auxiliary materials are applied, such as chain length regulators, emulsifying agents (emulsion polymerization) and compounds supplying free radicals.

Suitable chain length regulators are organosulphur compounds such as the often used mercaptans as well as the dialkyldixantogens, diarylsulphides mercaptothiazoles, tetra-alkyl thiurammono- and disulphides, etc., separately or mixed with each other, as well as hydroxyl compounds such as terpinolenes. In addition, the dimer of α-methylstyrene or an α-alkene having a relatively long chain can be used.

The commercially most frequently used chain length regulators are especially the mercapto compounds and of these it is the hydrocarbyl mercaptans with 8—20 carbon atoms per molecule that are much used currently. More in particular preference is given to mercaptans with a tertiary alkyl group.

The amount of organosulphur compound may vary within wide limits, depending on the mixture chosen, the specific compound, polymerization in temperature, emulsifying agent and other variables relating to the formulation. A good result can be obtained by using 0.01—5 parts by weight (per 100 parts by weight of monomer) of organosulphur compound, preference being given to 0.05—2 parts.

Suitable organosulphur compounds comprise n-octyl mercaptan, n-dodecyl mercaptan, tertiary dodecyl mercaptan, tertiary nonyl mercaptan, tertiary hexadecyl mercaptan, tertiary octadecyl mercaptan, tertiary eicosyl mercaptan, secondary octylmercaptan, secondary tridecyl mercaptan, cyclododecyl mercaptan, cyclododecadienyl mercaptan, aryl mercaptan such as 1-naphtalenethiol, etc., bis-(tetramethyl-thiuramdisulphide), 2-mercaptobenzathiazol, et cetera. Mixtures of these compounds can also be used.

As emulsifying agent widely different compounds can be used, such as disproportionated resin soap, fatty acid soap, mixtures of these compounds, arylsulphonates, alkylarylsulphonates and other surface-active compounds and mixtures thereof. Nonionogenic emulsifying agents may also be used, such as polyethers and polyols. The amounts of emulsifying agents used are dependent on the type as well as on the reaction parameters and the concentrations of polymerizable monomer in the emulsion polymerization system.

Suitable compounds supplying free radicals for the emulsion polymerization process are organic or inorganic peroxides, hydroperoxides, azo compounds as well as redox initiator systems. These compounds can be added at the start of the polymerization. It is also possible to add part of these compounds at the start and part in the course of the polymerization.

By preference alkali or ammonium persalts and/or redox systems are chosen as initiators. In particular mention should be made of potassium persulphate, ammonium persulphate and sodium persulphate. Exemplary of suitable redox systems are persalts (for instance perchlorates or persulphates), tertiary butylhydroperoxide, cumenehydroperoxide, diisopropylbenzenehydroperoxide and methylcyclohexyl-hydroperoxide, combined with reducing agents on the basis of acids containing sulphur in a low valence condition, such as sodium formaldehydesulphoxilate, bisulphide, pyrosulphide, or with organic basis such as triethanolamine, with dextrose, sodium pyrophosphate and mercaptans or combinations thereof, optionally in combination with metal salts such as ferrosulphate. These initiators or initiator systems may be added in one charge, step-wise or even gradually.

The rubber to be added preferably is a butadiene rubber. Suitable rubbers are polybutadiene, styrene-butadiene rubber or butadiene acrylonitrile rubber. More in particular the polybutadiene and styrene-butadiene rubbers are preferred. As already indicated above, it is essential that the rubber be mixed in latex form with the graft and/or copolymer. For this reason the rubber will preferably be prepared by an emulsion polymerization process. To this end the auxiliary materials indicated herein before for the preparation of both the rubber and the graft copolymer can be used.

The average particle size of the rubber to be added preferably is between 0.05 and 1.5 μm ($d_{50}$ on a weight basis). This size gives a good result as regards low surface gloss. In particular an average particle size in excess of 0.5 μm is preferred.

Mixing of the two or more latices can be effected in various ways. Examples are mixing in a static mixer, in an in-line mixer, or in a simple stirred vessel, into which the latices are introduced. It is of importance that the latices do not, or in any case not to any substantial degree, coagulate during mixing as otherwise problems may arise with the surface and mechanical properties of the final product.

After the latices have been mixed, the mixture is coagulated in a conventional way. This is usually done by adding a salt or an acid to the latex. Suitable compounds are sulphuric acid, calcium-chloride or magnesium sulphate.

The exact procedure and choice of the conditions depend, among other things, on the emulsifying agents used.

After the coagulation the slurry obtained can be dewatered and washed, so that after drying a powder is obtained.

This powder may then be mixed in an extruder with various auxiliary materials such as pigment, lubricant, antioxidant, antistatic agent, et cetera, after which the mixture is granulated or processed directly into products.

Optionally, one or more other plastics may also be mixed with the graft copolymer and the rubber. In the preparation of ABS, for instance, it is common practice to mix the graft copolymer with a copolymer of a vinyl aromatic compound and an acrylic compound (for instance SAN) to reduce or make uniform the content of grafted rubber in the eventual moulding compound.

This copolymer can be added in said extruder. In case the copolymer is available as latex, there may be advantage in mixing the latex of the copolymer with the latex of the graft copolymer.

The invention also relates to a thermoplastic moulding compound with low surface gloss that is characterized in that the moulding compound consists of

A. 25—95 parts by weight of the graft copolymer

B. 0—70 parts by weight of the copolymer, and

C. 5—35 parts by weight of the rubber, the rubber (C) in the form of a latex being mixed with a latex of the graft copolymer and/or the copolymer and the resultant mixture being coagulated and further processed in a way known *per se.*

According to the invention, surprisingly, an ABS product can be obtained which combines low surface gloss with good mechanical properties. Moreover, these products have the advantage that the gloss does not increase on heating. The point is that the conventional mat products in part of or wholly become glossy again on further processing (vacuum forming).

The invention will now be elucidated with reference to some examples.

Examples I—III

To a test reactor water, styrene, acrylonitrile, emulsifying agent (the potassium salt of disproportionated hydroabietinic acid), chain regulator (tertiary dodecyl mercaptane), polybutadiene latex and initiator were fed.

Subsequently, the polymerization was started. 333 Parts by weight of the graft latex formed (solids content 30 wt. %, 24 wt. % polybutadiene, styrene/acylonitrile ratio 70/30) were subsequently mixed, at a temperature of 60°C in a stirred vessel, with 30 parts by weight of an SBR latex (solids content 68 wt. %, $d_{50}$, alginate method (wt.): $5.9 \times 10^{-7}$ m (5900 Å). The tip speed during this mixing process was 2 m/s.

After a mixing time of 5 minutes the mixed latex was coagulated with sulphuric acid at 93°C. The powder obtained was centrifuged off, washed out and dried to a moisture content of $\leq 1$ wt. %. The resultant polymer mixture was subsequently mixed with a styrene-acrylonitrile copolymer (styrene/acrylonitrile ratio 70/30).

The results obtained are summarized in the table below.

TABLE 1

| Example | I | II | III |
|---|---|---|---|
| Polymer mixture (parts by weight) | 100 | 60 | 40 |
| SAN (parts by weight) | — | 40 | 60 |
| (1) Gloss o/oo | 1.8 | 5.5 | 8.3 |
| (2) Gloss o/oo | 7.3 | 16.3 | 21.2 |
| Izod kJ/m² (23°C) | 32.7 | 5.8 | 5.3 |
| Flexural modulus N/mm² | 1360 | 2200 | 2700 |
| Elongation at break % | 97 | 56 | 38 |

(1) Gloss measured on an extruded strip according to ASTM D 523 at an angle of 45°C
(2) Gloss measured after deep drawing of the extruded strip.

Examples IV through VI

A graft copolymer latex obtained according to the process mentioned in Examples I through III was mixed with a polybutadiene rubber latex in the ratio 333 parts graft copolymer latex and 51 parts polybutadiene latex (68 wt. % solids, $d_{50}=6.5 \times 10^{-7}$ m (6500 Å), wt., alginate), use being made of a static mixer with 21 segments. The mixture obtained was subsequently coagulated with sulphuric acid at 95°C, on which the powder was centrifuged off, washed out and dried.

After diluting with varying amounts of styrene acrylonitrile copolymer, the following properties were measured on the material.

4

### TABLE 2

| Example | IV | V | VI |
|---|---|---|---|
| Polymer mixture (parts by weight) | 100 | 65 | 35 |
| SAN (parts by weight) | — | 35 | 65 |
| (1) gloss o/oo | 1.6 | 2 | 3.2 |
| (2) Gloss o/oo | 5.2 | 8.9 | 15.3 |
| Izod kJ/mm$^2$ (23°C) | 6.7 | 9.3 | 9.7 |
| Flexural modulus N/mm$^2$ | 950 | 1875 | 2700 |
| Elongation at break % | 118 | 82 | 38 |

(1) and (2): see Table 1.

Examples VII through IX

30 m$^3$ of an ABS graft copolymer latex with a solids content of 30 wt. %, consisting of polybutadiene with styrene and acrylonitrile grafted on to it in a weight ratio of 70/30, was mixed with 2.65 m$^3$ of an SBR latex (solids content 68 wt. %; $d_{50}$ alginate method (wt.) $5.9 \times 10^{-7}$ m (5900 Å)). Mixing was effected in a static mixer, at a throughput velocity of 0.83 m/s. Immediately on leaving the static mixer the mixture obtained was coagulated with sulphuric acid, after which the powder was centrifuged off and dried. The properties on the polymer mixture obtained, after dilution with varying amounts of SAN copolymer, are presented in the following table.

### TABLE 3

| Example | VII | VIII | IX |
|---|---|---|---|
| Polymer mixture (parts by weight) | 100 | 60 | 40 |
| SAN (parts by weight) | — | 40 | 60 |
| (1) Gloss o/oo | 1.7 | 6.2 | 9.2 |
| (2) Gloss o/oo | 6.4 | 17.1 | 21.7 |
| Izod kJ/m$^2$ (23°C) | 26 | 6.9 | 6.2 |
| Flexural modulus N/mm$^2$ | 1340 | 2180 | 2760 |
| Elongation at break % | 93 | 54 | 37 |

Comparative Example

The procedure of Example 1 was repeated, however without the addition of SBR-latex. After coagulating, drying and extruding to a strip, the properties were as follows:

Gloss: 54 o/oo, after deep drawing: 54 o/oo, Izod: 226 kJ/m$^2$, flexural modulus 2300 N/mm$^2$ and elongation at break 26.4%.

**Claims**

1. Process for the preparation of a thermoplastic moulding composition having low surface gloss comprising a graft copolymer of a vinyl aromatic compound and an acrylic compound on rubber prepared in emulsion, and optionally a copolymer of a vinylaromatic compound and an acrylic compound prepared in emulsion, characterized in that a latex of the graft copolymer and optionally the copolymer is mixed with a latex of a rubber, without a substantial degree of coagulation during mixing, the mixture obtained is coagulated, dewatered, washed and dried.

2. Process according to claim 1, characterized in that such an amount of rubber latex is added that 5 to 25 wt.% added rubber is present in the moulding compound.

5

3. Process according to claim 2, characterized in that 10 to 20 wt. % added rubber is present.

4. Process according to any one of the claims 1—3, characterized in that a latex of a butadiene rubber is added.

5. Process according to claim 4, characterized in that a styrene-butadiene rubber is added.

6. Process according to claim 1 characterized in that the latex of a rubber has an average particle size between 0,05 and 1,5 µm.

7. Thermoplastic moulding compound having low surface gloss comprising:

A. 25—95 parts by weight graft copolymer of a vinyl aromatic compound and an acrylic compound on a rubber,

B. 0—70 parts by weight copolymer of a vinyl aromatic compound and an acrylic compound, and

C. 5—35 parts by weight rubber, characterized in that the rubber (C) has an average particle size between 0,05 and 1,5 µm.

8. Object made partially or wholly from a moulding compound prepared according to any one of the claims 1—6 or a moulding compound according to claim 7.

## Patentansprüche

1. Verfahren zur Herstellung einer thermoplastischen Formmasse mit schwachem Oberflächenglanz umfassend ein in Emulsion hergestelltes Pfropf-copolymer einer vinyl-aromatischen Verbindung und einer Acrylverbindung auf Kautschuk, und gegebenenfalls ein in Emulsion hergestelltes Copolymer einer vinylaromatischen Verbindung und einer Acrylverbindung, dadurch gekennzeichnet, daß ein Latex des Pfropf-copolymers und gegebenenfalls das Copolymer mit dem Latex eines Kautschuks vermischt wird ohne wesentliche Koagulation während des Mischens, das erhaltene Gemisch koaguliert, entwässert, gewaschen und getrocknet wird.

2. Verfahren nach Anspruch 1, dadurch gekennzeichnet, daß eine solche Menge Kautschuk zugesetzt wird, daß 5 bis 25 Gew.-% zugesetzter Kautschuk in der Formmasse anwesend sind.

3. Verfahren nach Anspruch 2, dadurch gekennzeichnet, daß 10 bis 20 Gew.-% zugesetzter Kautschuk anwesend sind.

4. Verfahren nach einem der Ansprüche 1—3, dadurch gekennzeichnet, daß ein Latex eines Butadienkautschuks zugesetzt wird.

5. Verfahren nach Anspruch 4, dadurch gekennzeichnet, daß ein Styrol-Butadienkautschuk zugesetzt wird.

6. Verfahren nach Anspruch 1, dadurch gekennzeichnet, daß der Latex eines Kautschuks eine durchschnittliche Teilchengröße zwischen 0,05 und 1,5 µm hat.

7. Thermoplastische Formmasse mit schwachem Oberflächenglanz umfassend:

A. 25—95 Gewichtsteile Pfropf-copolymer einer vinylaromatischen Verbindung und einer Acrylverbindung auf einem Kautschuk,

B. 0—70 Gewichtsteile Copolymer einer vinylaromatischen Verbindung und einer Acrylverbindung, und

C. 5—35 Gewichtsteile Kautschuk, dadurch gekennzeichnet, daß der Kautschuk (C) eine durchschnittliche Teilchengröße zwischen 0,06 und 1,5 µm hat.

8. Gegenstand, teilweise oder gänzlich bestehend aus einer Formmasse, hergestellt gemäß einem der Ansprüche 1 bis 6 oder einer Formmasse gemäß Anspruch 7.

## Revendications

1. Procédé pour la préparation d'une composition de moulage thermoplastique ayant un éclat de surface peu important comprenant un copolymère greffé d'un composé vinylaromatique et d'un composé acrylique sur un caoutchouc préparé en émulsion et, éventuellement un copolymère d'un composé vinylaromatique et d'un composé acrylique préparé an émulsion, caractérisé en ce qu'un latex du copolymère greffé et éventuellement du copolymère est mélangé avec un latex d'un caoutchouc, sans degré de coagulation sensible pendant le malaxage, le mélange obtenu est coagulé, déshydraté, lavé et séché.

2. Procédé selon la revendication 1, caractérisé en ce qu'on ajoute une quantité de latex de caoutchouc telle que 5 à 25% en poids du caoutchouc ajouté soient présents dans le compound de moulage.

3. Procédé selon la revendication 2, caractérisé en ce que 10 à 20% en poids du caoutchouc ajouté sont présents.

4. Procédé selon l'une quelconque des revendications 1 à 3, caractérisé en ce que l'on ajoute un latex d'un caoutchouc butadiène.

5. Procédé selon la revendication 4, caractérisé en ce que l'on ajoute un caoutchouc de styrène-butadiène.

6. Procédé selon la revendication 1, caractérisé en ce que le latex de caoutchouc a une granulométrie moyenne comprise entre 0,05 et 1,5 µm.

7. Compound de moulage thermoplastique avant un éclat de surface peu important comprenant:

A. 25 à 95 parties en poids de copolymère greffé d'un composé vinylaromatique et d'un composé acrylique sur un caoutchouc,

B. 0 à 70 parties en poids de copolymère d'un composé vinylaromatique et d'un composé acrylique, et

C. 5 à 35 parties en poids de caoutchouc, caractérisé en ce que le caoutchouc (C) a une granulométrie moyenne comprise entre 0,05 et 1,5 μm.

8. Produit fabriqué partiellement ou totalement à partir d'une composition de moulage préparée selon l'une quelconque des revendications 1 à 6 ou d'un compound de moulage selon la revendication 7.